# EUROPEAN PATENT APPLICATION

(11) **EP 1 032 199 A2**
(43) Date of publication of application: **30.08.2000**
(21) Application number: 00103419.8
(22) Date of filing: 25.02.2000
(51) Int. Cl.: H04N 5/235

(54) **Method of controlling sensitivity of imaging unit on vehicle and its circumference monitoring apparatus for applying the method**

(30) Priority: 25.02.1999 JP 4898999
(71) Applicant: Yazaki Corporation, Minato-ku, Tokyo 108-0073 (JP)
(72) Inventor: Okamoto, Keiki, Hamana-gun, Shizuoka-ken 431-0213 (JP); Ishikawa, Naoto, Yazaki Corporation, Susono-shi, Shizuoka-ken 410-1194 (JP); Fujinami, Kazutomo, Yazaki Corporation, Susono-shi, Shizuoka-ken 410-1194 (JP)
(74) Representative: HOFFMANN - EITLE

(57) **Abstract**

A sensitivity control method is provided to control sensitivity of a CCD camera installed in an owner's vehicle. The information about the owner's vehicle and the circumferential information are collected on the basis of a picture taken by the CCD camera. The circumferential information includes both brightness of the circumference and lighting condition of the circumferential vehicle. The information about the owner's vehicle also includes the lighting condition of the owner's vehicle. Further, by considering both of the circumferential information and the owner's vehicle information overall, an appropriate sensitivity is calculated for the CCD camera.

## Description

### BACKGROUND OF THE INVENTION

### 1. Field of the Invention

The present invention relates to a method of controlling the sensitivity of an imaging unit installed in a vehicle, for example, a CCD camera for taking a picture of the circumference of the vehicle. Particularly, it relates to the sensitivity controlling method of the imaging unit which is capable of imaging another vehicle in the neighborhood of the owner's vehicle faithfully, irrespective of time segments (incl. the daytime, evening and nighttime) or an imaging environment (e.g. climatic conditions). Note, in the specification, a vehicle in the neighborhood of the owner's vehicle will be referred to --circumferential vehicle--, hereinafter.
Further, the present invention also relates to a vehicle's circumference monitoring apparatus that adopts the above-mentioned sensitivity control method, particularly, a vehicle's circumference monitoring apparatus which can faithfully image the circumferential vehicle irrespective of the time segments or the imaging environment, improving the circumferential monitoring accuracy remarkably.

### 2. Description of the Related Art

Japanese Patent Publication No. 7-50769 discloses a vehicle's circumference monitoring apparatus. In the monitoring apparatus, a designated image processing is applied on a circumferential picture in the neighborhood of the owner's vehicle. The imaging unit (e.g. CCD camera) serves to take the picture in order to recognize the circumferential vehicle and also monitor the relative positional relationship between the circumferential vehicle on recognition and the owner's vehicle.

Now, we discuss the case that the vehicle's circumference monitoring apparatus of this kind operates to monitor the neighborhood of the owner's vehicle early in the evening. Even if there exists the circumferential vehicle in the neighborhood of the owner's vehicle, it would be difficult for the imaging unit of normal sensitivity to take a clear picture of the different vehicle because it is under cover of early evening.

Hitherto, it has been carried out to switch the sensitivity of the imaging unit into a high sensitivity in association with the driver's manipulation to light small lamps of the vehicle, thereby meeting the deterioration of the imaging environment.

In the above-mentioned measure, since the change in sensitivity of the imaging unit is dependent on the driver's manipulation timing of the small lamps, there is a possibility that the imaging environment is not still compensated though it is being deteriorated, in the vehicle driven by a driver who is apt to light the small lights lately. Consequently, the above-mentioned conventional apparatus has a problem of difficulty to take a faithful picture of the circumferential vehicle irrespective of the imaging environment.

Further, when the imaging unit is established to have a high sensitivity in the nighttime, especially in the night after rain, the imaging unit picks up the headlights of the circumferential vehicle while they are enlarged in comparison with the actual size. Therefore, the circumferential vehicle may be recognized as being not a vehicle by mistake.

Under the circumstances, there has been eagerly expected a development of new technique which allows the circumferential vehicle in the vicinity of the owner's vehicle to be faithfully taken irrespective of the imaging environment.

### SUMMARY OF THE INVENTION

Under the circumstances, it is therefore an object of the present invention to provide a sensitivity controlling method which allows an imaging unit to take a picture of another vehicle (i.e. circumferential vehicle) in the circumference of the owner's vehicle faithfully, irrespective of time segments including daytime, early evening and nighttime or an imaging environment, such as climatic conditions, so that the circumferential vehicle can be prevented from being recognized by mistake.

It is another object of the present invention to provide a vehicle's circumference monitoring method which is capable of taking a picture of the circumferential vehicle faithfully without being influenced by the time segments including daytime, early evening and nighttime or the imaging environment, thereby improving the monitoring accuracy remarkably.

The former object of the present invention described above can be accomplished by a sensitivity control method of controlling sensitivity of an imaging unit installed in an owner's vehicle for taking a picture of the circumference of the owner's vehicle, the method comprising the steps of:
collecting a circumferential information including both brightness of the circumference of the owner's vehicle and lighting condition of a circumferential vehicle in the neighborhood of the owner's vehicle, on the basis of the picture taken by the imaging unit, while collecting an owner's vehicle information including a lighting condition of the owner's vehicle;
considering both of the circumferential information and the owner's vehicle information overall thereby to calculate a sensitivity suitable to the imaging unit; and
setting the so-calculated sensitivity as the present sensitivity of the imaging unit.

According to the invention, the imaging unit can take the picture in the vicinity of the owner's vehicle with an appropriate sensitivity. It is possible to image the circumferential vehicle faithfully irrespective of the time segments including daytime, early evening and nighttime or the imaging environment, such as climatic conditions. Consequently, the circumferential vehicle can be prevented from being recognized by mistake.

In the present invention, preferably, both lighting conditions of the circumferential vehicle and the owner's vehicle comprise the lighting conditions of respective small lamps and/or respective headlights of the circumferential vehicle and the owner's vehicle.

In this case, it is expected to improve the effect of preventing the erroneous recognition against the circumferential vehicle, owing to the adoption of the vehicle's small lamps and/or headlights having a great influence on the lighting condition.

According to the invention, the above object can be also accomplished by a sensitivity control method of controlling sensitivity of an imaging unit installed in an owner's vehicle for taking a picture of the circumference of the owner's vehicle, the method comprising the steps of:
collecting a circumferential information including both brightness of the circumference of the owner's vehicle and lighting condition of a circumferential vehicle in the neighborhood of the owner's vehicle, on the basis of the picture taken by the imaging unit, while collecting an owner's vehicle information including a lighting condition thereof;
considering both of the circumferential information and the owner's vehicle information overall thereby to judge which of daytime, early evening and nighttime the present time belongs to;
selecting a sensitivity suitable to the present time from plural stages of sensitivities established for the imaging unit in advance, on the basis of the judgement of the present time; and
setting the so-selected sensitivity as the sensitivity of the imaging unit.

According to the invention, the picture in the vicinity of the owner's vehicle is imaged by the imaging unit having its sensitivity suitable to the present time. Therefore, it is possible to image the circumferential vehicle faithfully irrespective of the time segments including daytime, early evening and nighttime or the imaging environment, such as climatic conditions. As the result, the circumferential vehicle can be prevented from being recognized by mistake.

In the above-mentioned invention, preferably, a predetermined sensitivity is established as a normal sensitivity for the imaging unit in case of the judgement of daytime; a high sensitivity in comparison with the normal sensitivity is established in case of the judgement of early evening; and a low sensitivity in comparison with the normal sensitivity is established in case of the judgement of nighttime.

Also in the invention, it is preferable that both lighting conditions of the circumferential vehicle and the owner's vehicle comprise the lighting conditions of respective small lamps and/or respective headlights of the circumferential vehicle and the owner's vehicle.

In this case, owing to the adoption of the vehicle's small lamps and/or headlights having a great influence on the lighting condition, it can be expected to improve the effect of preventing the erroneous recognition against the circumferential vehicle,.

The latter object of the present invention described above can be accomplished by a vehicle's circumference monitoring apparatus comprising:
an imaging unit installed in an owner's vehicle, for taking a picture of the circumference of the owner's vehicle;
a collecting unit electrically connected to the imaging unit, for collecting a circumferential information including both brightness of the circumference of the owner's vehicle and lighting condition of a circumferential vehicle in the neighborhood of the owner's vehicle, on the basis of the picture taken by the imaging unit, the collecting unit further collecting an owner's vehicle information including a lighting condition thereof;
a calculating unit electrically connected to the collecting unit, for calculating a sensitivity suitable to the imaging unit by considering both of the circumferential information and the owner's vehicle information overall;
a setting unit electrically connected to the calculating unit, for setting the so-calculated sensitivity as the present sensitivity of the imaging unit, thereby to control the sensitivity of the imaging unit;
a recognizing unit electrically connected to the setting unit, for recognizing the circumferential vehicle existing in the neighborhood of the owner's vehicle by applying a designated image processing on the circumferential picture taken by the imaging unit of the so-calculated sensitivity; and
a monitoring unit electrically connected to the recognizing unit, for monitoring a relative positional relationship between the circumferential vehicle on recognition and the owner's vehicle.

According to the invention, the recognizing unit recognizes the circumferential vehicle by applying the designated image processing on the circumferential picture taken by the imaging unit of the appropriate sensitivity, while the monitoring unit operates to monitor the relative positional relationship between the circumferential vehicle on recognition and the owner's vehicle. Therefore, it is possible to image the circumferential vehicle faithfully irrespective of the time segments including daytime, early evening and nighttime or the imaging environment, such as climatic conditions and also possible to improve the monitoring accuracy remarkably.

Preferably in addition to the above constituents of the apparatus, it further comprises:
a judging unit electrically connected to the monitoring unit, for judging a degree of danger against the owner's vehicle from the relative positional relationship between the circumferential vehicle and the owner's vehicle;
an alarm unit for raising an alarm to a passenger on the owner's vehicle; and
a command unit connected to the judging unit and the alarm unit, for generating a commend to drive the alarm unit corresponding to the degree of danger.

In this case, the passenger can be informed of the degree of danger with high reliability on the ground of the improved monitoring accuracy.

These and other objects and features of the present invention will become more fully apparent from the following description and appended claims taken in conjunction with the accompany drawings.

### BRIEF DESCRIPTION OF THE DRAWINGS

Fig. 1 is a functional block diagram of a vehicle's circumference monitoring apparatus of the present invention;
Fig. 2 is a flow chart for explanation of the operation of the vehicle's circumference monitoring apparatus of the present invention; and
Fig. 3 is a flow chart for explanation of the operation of an imaging unit of the invention, in controlling its sensitivity.

### DESCRIPTION OF THE PREFERRED EMBODIMENT

One embodiment of the present invention will be described with reference to the drawings.

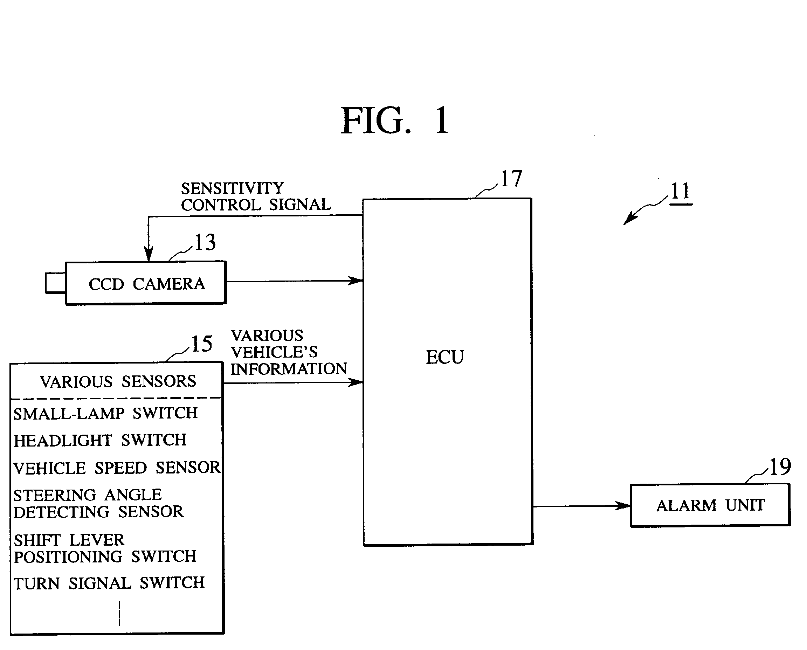

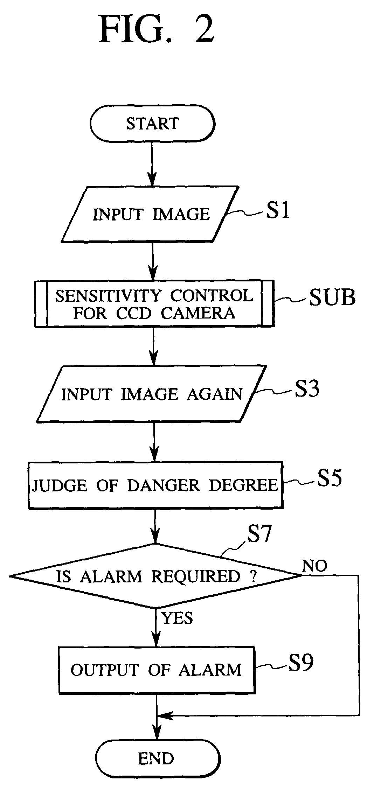

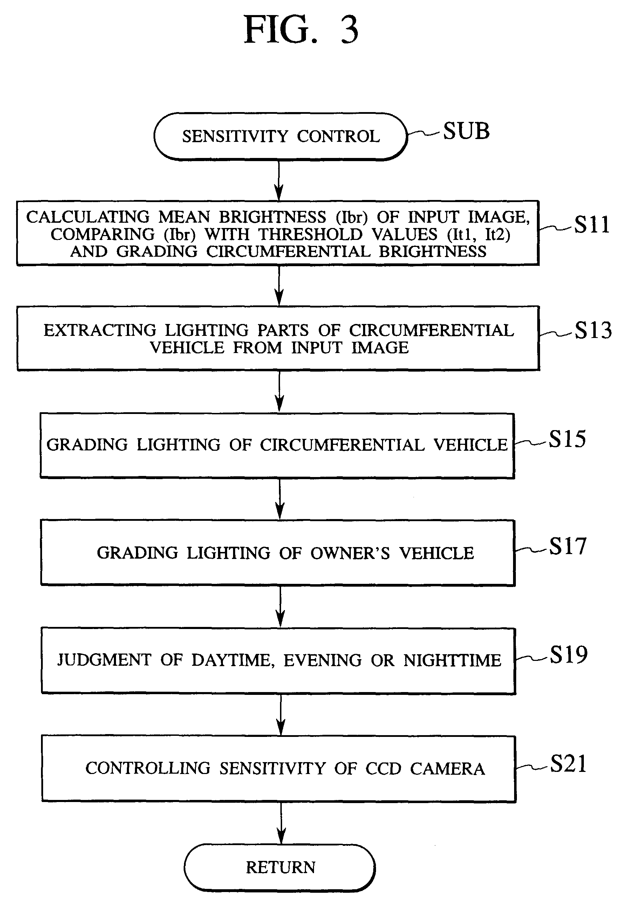

Fig. 1 is a functional block diagram of a vehicle's circumference monitoring apparatus of the present invention. In Fig. 1, reference numeral 11 designates the vehicle's circumference monitoring apparatus of the invention. Fig. 2 is a flow chart for explanation of the operation of the vehicle's circumference monitoring apparatus of the present invention. Fig. 3 is a flow chart for explanation of the operation of an imaging unit of the apparatus in case of controlling the sensitivity of the imaging unit.

With reference to Fig. 1, we now describe the vehicle's circumference monitoring apparatus 11 on which the sensitivity controlling method of the invention is to be applied.

As shown in the figure, the vehicle's circumference monitoring apparatus 11 includes a CCD camera 13 operating as the imaging unit installed in a vehicle (not shown), a variety of sensors 15, an ECU 17 and an alarm unit 19. The ECU 17 operating as information-collecting means, imaging unit's sensitivity setting means, recognizing means and monitoring means all described later.

Normally, the vehicle is equipped with a plurality of CCD cameras in respective appropriate positions, for example, the vehicle's front section, the rear section, the side portions, the front/side part, the rear/side part, etc. With an appropriate sensitivity in accordance with a command of sensitivity from the ECU 17, each CCD camera 13 does take a picture of the neighboring vehicle existing in the vicinity of the front section of the owner's vehicle, the rear section, the side portions, the front/side part or the rear/side part. Note, the shown apparatus 11 has a single CCD camera 13 for ease of explanation. In this specification, the "sensitivity" may be defined by the magnitude of output signal (generally, voltage) to the intensity of incident light against the CCD camera 13. In other words, it is said that when the sensitivity is raised under a constant intensity of incident light, there can be obtained a large output signal, while when lowering the sensitivity under the same condition, then there is provided a small output signal. However, since the rising of sensitivity causes the noise components in the incident light to be amplified simultaneously, there is no reason that the simple rising of the sensitivity allows the circumference monitoring accuracy to be improved. Thus, it is important to carry out the appropriate control in sensitivity while taking the magnitude of noise, etc. into consideration.

The group of sensors 15 includes a small lamp switch (referred to --SW--, hereinafter) for outputting the information of ON/OFF state in a not-shown small lamp, a vehicle speed sensor for detecting the velocity of the vehicle, a steering angle sensor for detecting the steering angle of the vehicle, a headlight SW for outputting the information of ON/OFF state in a not-shown headlight, a gear position SW for outputting the information about the present position of a shift lever, a turn signal SW outputting the indicating direction of a turn-signal, etc.

The ECU 17 has the following functions to:
collect the information including the brightness of the circumference of the owner's vehicle and the lighting condition of the circumferential vehicle in the neighborhood of the owner's vehicle by applying a designated image processing on a picture taken by the CCD camera 13;
calculate an appropriate sensitivity of the CCD camera 13 by considering the above information brought by the collecting function and the vehicle's information (incl. lighting inf.) from the sensors 15;
set the appropriate sensitivity obtained the calculating function to the CCD camera 13;
recognize the circumferential vehicle by applying the designated image processing on the picture taken by the CCD camera 13 at the appropriate sensitivity;
monitor a relationship in relative position between the circumferential vehicle on recognition and the owner's vehicle;
judge the degree of danger of the owner's vehicle from the obtained relationship in relative position between the circumferential vehicle on recognition and the owner's vehicle; and
command the alarm unit 19 to raise an alarm signal when the so-obtained degree of danger is large in comparison with a predetermined value.
Note, the ECU 17 includes various units respectively performing the above functions and electrically connected with each other though they are not shown in the figure.

The alarm unit 19 has a function to raise the alarm signal on receipt of the alarm command outputted from the ECU 17.

Next, we describe the operation of the vehicle's circumference monitoring apparatus 11 and the operation in the sensitivity control method applied on the apparatus 11 with reference to Figs. 2 and 3.

As shown in Fig. 2, at step S1, it is executed in the ECU 17 to input the picture taken by using the CCD camera 13. Then, the routine goes to a sub-routine SUB. In the sub-routine SUB, the ECU 17 carries out the sensitivity control process. In the process, it is executed to calculate the appropriate sensitivity of the CCD camera 13 by considering the information (incl. brightness of vicinity of the owner's vehicle, lighting condition of circumferential vehicle) brought by the above-mentioned information collecting function and the vehicle's information (incl. lighting condition of owner's vehicle) from the sensors 15. Additionally, it is executed to set the appropriate sensitivity obtained the calculating function to the CCD camera 13. After completing the sensitivity control process, then the process returns to the main routine.

In detail, at step S11 of Fig. 3, it is executed to calculate an average of brightness I_{br} of a picture inputted from the CCD camera 13. Additionally, it is executed in the ECU 17 to compare the calculated average I_{br} with first and second threshold values Iₜ₁, Iₜ₂ (note: Iₜ₁<Iₜ₂) and further grade the brightness of the vehicle's environment on the basis of the above comparison result. As to the grading, it is established so that the more the circumference of the owner's vehicle is regarded as dark, the higher the average of brightness is graded. For example, if the calculated average I_{br} is more than the second threshold value Iₜ₂, then the grading of zero (0) point is provided; one (1) point for the calculated average I_{br} within a range from the first threshold value Iₜ₁ to the second threshold value Iₜ₂; and two (2) points for the calculated average I_{br} less than the first threshold value Iₜ₁.

At sequent step S13, based on the picture inputted from the CCD camera 13, the ECU 17 operates to apply an image processing to extract the circumferential vehicle's lighting parts containing the small lamps and the headlights, as its characteristic points.

At step S15, it is executed in the ECU 17 to pick up the lighting condition of the circumferential vehicle's lighting parts extracted at step S13 and further grade the so-picked lighting condition. As to this grading, it is established so that the more the circumference of the owner's vehicle is regarded as dark, the higher point the lighting condition does get. That is, for example, if all the circumferential vehicle's lighting parts are switched off, then the grading of zero (0) point is provided; two (2) points for the small lights being switched on; and three (3) points for the headlights being switched on.

At step S17, it is executed in the ECU 17 to pick up the vehicle information including the lighting condition of the owner's vehicle's lighting parts (e.g. small lamps, headlights) from the sensors 15 and further grade the so-picked lighting condition of the owner's vehicle. As to this grading, it is established so that the darker the circumference of the owner's vehicle is regarded from the lighting condition, the higher point the lighting condition does get. That is, for example, if all the circumferential vehicle's lighting parts are switched off, then the grading of zero (0) point is provided; two (2) points for the small lights being switched on; and three (3) points for the headlights being switched on.

At sequent step S19, it is executed to integrate the respective points obtained at steps S11, S15 and S17 and further judge which of daytime, early evening and nighttime the present time belongs to, on the basis of the calculated total point. According to the grading, for example, when the total point is from zero (0) to one (1), then there is the judgement of daytime; the judgement of early evening for the total point from two (2) to five (5); and the judgement of nighttime for the total point more than six (6).

Based on the resultant judgement of time at step S19, it is executed at step S21 to select the sensitivity of the CCD camera 13 suitable to the present time from several stages of sensitivities and further provide a command to establish the selected appropriate selectivity in the CCD camera 13.

In detail, when it is judged that the present time is in the daytime, a normal sensitivity is established for the CCD camera 13; a higher sensitivity for the camera in the early evening; and the normal or lower sensitivity in the nighttime.

Note, the reason why the normal or lower sensitivity is allocated to the CCD camera 13 in the nighttime comes from the purpose of negating the influence of illumination reflected from e.g. a sidewall, a load surface, etc., which may be noise in imaging the vehicle's lighting parts.

In the modification, the above-mentioned process to select the proper sensitivity from several stages of sensitivities may be replaced by calculating a sensitivity suitable to the present time thereby to set it for the CCD camera 13.

After completing the above process, then the process returns to the main routine. At step S3 of Fig. 2, the ECU 17 again inputs the picture taken at the appropriate sensitivity by the CCD camera 13 and then the routine goes to step S5.

At step S5, there are carried out the following processes of: recognizing the circumferential vehicle by applying the picture taken by the CCD camera 13 at the appropriate sensitivity; monitoring the relative positional relationship between the circumferential vehicle on recognition and the owner's vehicle; and judging the degree of danger of the owner's vehicle from the obtained relative positional relationship. In detail, for example, some CCD cameras 13 are arranged in the vicinity of the vehicle's rear section in order to take pictures exhibiting the vehicle's rear, left-side and right-side views. Then, the designated image processing is applied on the pictures for recognizing the circumferential vehicle thereby to monitor the relative positional relationship between the circumferential vehicle on recognition and the owner's vehicle.

Based on the vehicle information from the sensors 15 (e.g. lighting conditions of turn signals, steering angle, vehicle speed), when it is judged that the owner's vehicle is now changing its traveling lane (or turning to the right or left), the ECU 17 carries out the judgement of danger (critical level) by considering the above relationship between the circumferential vehicle and the owner's vehicle and the approaching speed therebetween. In other words, it is executed to judge whether there is produced a possibility of traffic collision or involving the circumferential vehicle. As the result of judgement, if it is judged that the owner's vehicle may be subjected to the traffic collision or involving, the ECU 17 commands the alarm unit 19 to raise the alarm signal because of largeness in degree of danger.

Therefore, if it is judged that the degree of danger is large at step S7, then the routine goes to step S9. On the contrary, if the judgement at step S7 is No, then the routine is ended.

At step S9, the ECU 17 outputs a drive command to the alarm unit 19 in order to raise a warning. After completing the command, the above-mentioned circumference monitoring process is completed. Note, on receipt of the command, the alarm unit 19 generates the warning to the passenger. Consequently, it is possible to inform the passenger on the vehicle of the large degree of danger timely. Together with the information, it can be expected to effect the great contribution on the vehicle's safety driving while preventing the occurrence of accidents, for example, the traffic collision against the circumferential vehicle, the involving, etc.

It will be understood by those skilled in the art that the foregoing description is one embodiment of the present invention. Various changes and modifications may be made to the present invention without departing from the spirit and scope of the invention.

For example, although the appropriate sensitivity of the CCD camera 13 is calculated by the total sum of respective points corresponding to various information about the owner's vehicle and the circumferential vehicle in the shown embodiment, of course, the present invention is not limited to the embodiment only. In short, according to the invention, it is important to consider the information about the brightness around the owner's vehicle and the lighting conditions of the owner's vehicle and the circumferential vehicle overall in order to calculate the appropriate sensitivity of the CCD camera 13. It goes without mentioning that the above embodiment to convert the information into respective points is nothing but one embodiment for explanation of the present invention.

## Claims

1. A sensitivity control method of controlling sensitivity of an imaging unit installed in an owner's vehicle for taking a picture of the circumference of the owner's vehicle, the method comprising the steps of:
collecting a circumferential information including both brightness of the circumference of the owner's vehicle and lighting condition of a circumferential vehicle in the neighborhood of the owner's vehicle, on the basis of the picture taken by the imaging unit, while collecting an owner's vehicle information including a lighting condition of the owner's vehicle;
considering both of the circumferential information and the owner's vehicle information overall thereby to calculate a sensitivity suitable to the imaging unit; and
setting the so-calculated sensitivity as the present sensitivity of the imaging unit.

2. A sensitivity control method as claimed in Claim 1, wherein both lighting conditions of the circumferential vehicle and the owner's vehicle comprise the lighting conditions of respective small lamps of the circumferential vehicle and the owner's vehicle.

3. A sensitivity control method as claimed in Claim 1, wherein both lighting conditions of the circumferential vehicle and the owner's vehicle comprise the lighting condition of respective headlights of the circumferential vehicle and the owner's vehicle.

4. A sensitivity control method of controlling sensitivity of an imaging unit installed in an owner's vehicle for taking a picture of the circumference of the owner's vehicle, the method comprising the steps of:
collecting a circumferential information including both brightness of the circumference of the owner's vehicle and lighting condition of a circumferential vehicle in the neighborhood of the owner's vehicle, on the basis of the picture taken by the imaging unit, while collecting an owner's vehicle information including a lighting condition thereof;
considering both of the circumferential information and the owner's vehicle information overall thereby to judge which of daytime, early evening and nighttime the present time belongs to;
selecting a sensitivity suitable to the present time from plural stages of sensitivities established for the imaging unit in advance, on the basis of the judgement of the present time; and
setting the so-selected sensitivity as the sensitivity of the imaging unit.

5. A sensitivity control method as claimed in Claim 4, wherein a predetermined sensitivity is established as a normal sensitivity for the imaging unit in case of the judgement of daytime; a high sensitivity in comparison with the normal sensitivity is established in case of the judgement of early evening; and a low sensitivity in comparison with the normal sensitivity is established in case of the judgement of nighttime.

6. A sensitivity control method as claimed in Claim 5, wherein both lighting conditions of the circumferential vehicle and the owner's vehicle comprise the lighting conditions of respective small lamps of the circumferential vehicle and the owner's vehicle.

7. A sensitivity control method as claimed in Claim 5, wherein both lighting conditions of the circumferential vehicle and the owner's vehicle comprise the lighting conditions of respective headlights of the circumferential vehicle and the owner's vehicle.

8. A vehicle's circumference monitoring apparatus comprising:
an imaging unit installed in an owner's vehicle, for taking a picture of the circumference of the owner's vehicle;
a collecting unit electrically connected to the imaging unit, for collecting a circumferential information including both brightness of the circumference of the owner's vehicle and lighting condition of a circumferential vehicle in the neighborhood of the owner's vehicle, on the basis of the picture taken by the imaging unit, the collecting unit further collecting an owner's vehicle information including a lighting condition thereof;
a calculating unit electrically connected to the collecting unit, for calculating a sensitivity suitable to the imaging unit by considering both of the circumferential information and the owner's vehicle information overall;
a setting unit electrically connected to the calculating unit, for setting the so-calculated sensitivity as the present sensitivity of the imaging unit, thereby to control the sensitivity of the imaging unit;
a recognizing unit electrically connected to the setting unit, for recognizing the circumferential vehicle existing in the neighborhood of the owner's vehicle by applying a designated image processing on the circumferential picture taken by the imaging unit of the so-calculated sensitivity; and
a monitoring unit electrically connected to the recognizing unit, for monitoring a relative positional relationship between the circumferential vehicle on recognition and the owner's vehicle.

9. A vehicle's circumference monitoring apparatus as claimed in Claim 8, further comprising:
a judging unit electrically connected to the monitoring unit, for judging a degree of danger against the owner's vehicle from the relative positional relationship between the circumferential vehicle and the owner's vehicle;
an alarm unit for raising an alarm to a passenger on the owner's vehicle; and
a command unit connected to the judging unit and the alarm unit, for generating a commend to drive the alarm unit corresponding to the degree of danger.
